# FASCICULE DE BREVET EUROPEEN

(11) **EP 1 336 332 B1**
(45) Date de publication et mention de la délivrance du brevet: **19.09.2007**
(21) Numéro de dépôt: 03364001.2
(22) Date de dépôt: 11.02.2003
(51) Int. Cl.: A01C 17/00

(54) **Dispositif et machine d'épandage centrifuge d'engrais ou de produits similaires en grains**
Vorrichtung und Maschine zum Verteilen von Dünger oder anderem kornförmigen Material
Device and machine for broadcasting fertilizer or other similar granular products

(30) Priorité: 14.02.2002 FR 0201861
(43) Date de publication de la demande: 20.08.2003
(73) Titulaire: SULKY-BUREL S.A., F-35220 Chateaubourg (FR)
(72) Inventeur: Clochard, Daniel, 35113 Domagne (FR); Leveille, Lionel, 35370 Breal Sous Vitre (FR)
(74) Mandataire: Branger, Jean-Yves

(56) Documents cités:
- EP-A- 0 489 674
- FR-A- 2 751 505

## Description

La présente invention concerne un dispositif et une machine d'épandage centrifuge d'engrais ou de produits similaires en grains.

Dans la suite de la présente demande y compris les revendications, on utilisera le terme "produits", aussi bien que l'expression "produits en grains", pour désigner indifféremment des engrais ou d'autres produits granuleux d'aspect similaire.

Un dispositif d'épandage de ce type, bien connu, comprend un disque rotatif d'axe vertical portant au moins deux pales éjectrices, dites standard, servant à l'épandage normal.

Ce genre de dispositif est monté à la sortie d'une trémie recevant l'engrais, et est porté par un tracteur.

Un orifice de distribution, généralement équipé d'une trappe de dosage, assure l'écoulement de l'engrais sur le disque.

Certains matériels sont équipés de deux disques disposés côte à côte et tournant en sens contraire.

Lors de l'épandage des produits, notamment lorsqu'il s'agit d'engrais, se pose le problème de l'épandage en bordure du champ.

Par le tenue "bordure", on entend aussi bien un élément matériel tel qu'une haie, un fossé ou une barrière, qui borde l'un des côtés du champ, que la limite d'une parcelle voisine.

La disposition et l'orientation des pales équipant le ou les disque(s) distributeur(s) sont déterminées de telle manière que la densité des grains distribués au cours d'un passage du dispositif soit quasiment constante sur la majeure partie de la bande couverte par le passage.

En pratique, le spectre d'épandage comporte des zones d'extrémité sur lesquels la densité décroît à peu près linéairement vers l'extérieur. Cependant, cette zone de densité non homogène est compensée par l'apport de grains lors du passage suivant, les deux extrémités des spectres se superposant pour donner une résultante à peu près constante.

Il se pose cependant le problème de l'épandage d'une bordure du champ, où les constructeurs essaient d'obtenir une cassure du spectre, faisant que la distribution est à peu près homogène jusqu'à la limite du champ, et décroît brutalement, de manière à ne pas épandre au-delà de la limite.

Pour ce faire, différentes solutions ont été proposées.

Une solution, qui fait l'objet notamment du document FR-A-2 669 806, est de doter la sortie de la trémie d'un volet déflecteur mobile, apte à intercepter et à dévier une partie du flux de produit s'écoulant de la trémie vers le disque épandeur, pour la diriger vers le reste du flux.

Si cette solution donne généralement satisfaction, elle présente l'inconvénient de ne pouvoir s'adapter facilement à tous les types de distributeurs d'engrais disponibles dans le commerce.

Il a été également proposé de munir la zone d'extrémité aval de la pale éjectrice d'une partie mobile orientable et/ou coulissante.

En modifiant la position de cette partie d'extrémité par rapport à la pale éjectrice, il est possible de modifier, dans une certaine mesure, la zone d'extrémité du spectre.

Cependant, le réglage de position de la porte partie mobile de la pale est souvent délicat et source d'erreur pour l'utilisateur.

On a aussi proposé dans le document FR-A-2 751 505 de prévoir sur le disque d'épandage, en plus des deux pales éjectrices dites standard, une pale auxiliaire amovible ou escamotable, qui possède une longueur plus courte que la pale standard à laquelle elle est associée, cette pale auxiliaire étant positionnable devant cette dernière de telle manière qu'elle intercepte la totalité du flux des produits qui sont déversés devant elle sur le disque, et les projette à l'extérieur de celui-ci tout en empêchant qu'ils n'atteignent la pale standard associée.

Si ce dispositif donne généralement satisfaction pour ce qui concerne la qualité de l'épandage, il présente cependant un inconvénient non négligeable qui est lié au fait que, lorsqu'on souhaite revenir à un épandage normal, il est nécessaire que l'opérateur descende du tracteur et procède à l'escamotage ou au démontage de la pale auxiliaire.

On comprend aisément que cette manipulation est fastidieuse et qu'elle est source d'une perte de temps non négligeable.

La présente invention a pour but de pallier cet inconvénient, en proposant un dispositif du même type général que celui qui vient d'être cité, mais dont les pales standard et auxiliaire peuvent rester à demeure sur le disque, tout en donnant la possibilité à l'utilisateur du dispositif de procéder indifféremment à des épandages normaux ou de bordure, sans avoir à quitter son tracteur, ni à procéder à un quelconque démontage ou manipulation desdites pales.

Il s'agit donc d'un dispositif d'épandage centrifuge d'engrais ou de produits similaires en grains, qui comprend au moins un disque rotatif, d'axe vertical, portant au moins deux pales éjectrices, dites standard, servant à l'épandage normal, et au moins une pale, dite auxiliaire, associée à l'une des pales standard et servant à l'épandage de bordure, qui est plus courte que ladite pale standard et qui est positionnée devant cette dernière pour intercepter, en vue d'un épandage de bordure, le flux de produits déversés devant elle sur le disque et les projeter à l'extérieur.

Selon l'invention, ce dispositif comporte des moyens de sélection, aptes à modifier la zone de chute des produits sur le disque, de sorte que dans un premier état d'épandage normal, la pale standard intercepte lesdits produits, tandis que la pale auxiliaire n'intercepte pas de produits, et que dans un second état d'épandage de bordure, la pale auxiliaire intercepte lesdits produits, tandis que la pale standard n'intercepte pas de produits.

En modifiant ainsi, par lesdits moyens de sélection, la zone de chute des produits sur le disque, on met en oeuvre une technique qui va pouvoir être, le cas échéant, pilotée à distance, notamment depuis la cabine de pilotage du tracteur recevant le dispositif, sans que le conducteur n'ait à descendre de son véhicule.

Par ailleurs, selon un certain nombre de caractéristiques additionnelles possibles, mais non limitatives, de la présente invention
- lesdits moyens de sélection sont aptes à diriger sélectivement le flux de produits vers l'une ou l'autre de deux zones de chute, à savoir une première zone située devant la pale standard, juste en arrière de la pale auxiliaire pour un épandage normal, et une seconde zone située en avant la pale auxiliaire, pour un épandage de bordure ;
- lesdits moyens de sélection agissent dans une direction sensiblement perpendiculaire à la direction de déplacement du dispositif ;
- lesdits moyens de sélection consistent en des moyens de déplacement d'au moins l'extrémité inférieure de ladite goulotte, entre une première position située à la verticale de ladite première zone et une seconde position située à la verticale de ladite seconde zone ;
- le poste de pilotage dudit tracteur comporte des moyens de commande à distance desdits moyens de sélection ;
- le dispositif comporte également des moyens de réglage aptes à orienter sélectivement le flux dans une direction généralement parallèle à sa direction de déplacement ;
- les pales standard sont rectilignes, tandis que la pale auxiliaire est courbe, de concavité dirigée vers l'avant ;
- les pales standard sont rectilignes, tandis que la pale auxiliaire est coudée, constituée de deux parties rectilignes qui forment entre elles un angle (α) supérieur à l'angle droit, dont l'ouverture est tournée vers l'avant ;
- la partie extérieure est réglable par rapport à la partie intérieure par pivotement permettant de modifier ledit angle, ou par translation axiale permettant d'en modifier la longueur active ;
- la pale auxiliaire est plus haute que la pale standard à laquelle elle est associée, au moins au niveau de la zone de chute du produit sur le disque ;
- les deux pales standard sont chacune combinées à une pale de bordure ;
- la paroi de ladite pale auxiliaire est prévue rugueuse , au moins sur sa face avant, destinée à venir en contact avec le produit ;
- le dispositif comporte une plaque qui recouvre partiellement la pale auxiliaire et s'étend vers l'arrière de celle-ci, dans une région immédiatement voisine de la zone de chute des produits, et dans leur sens de déplacement le long de la pale ;
- lesdits moyens de sélection consistent en des moyens de déplacement dudit disque dans son propre plan, d'une première position dans laquelle la zone de chute des grains est située devant la pale standard, juste en arrière de la pale auxiliaire, pour un épandage normal, et une seconde position dans laquelle la zone de chute est située en avant de la pale auxiliaire pour un épandage de bordure ;
- le dispositif comporte une série de jeux de pales constitués chacun d'une pale auxiliaire) et d'une pale standard qui lui est adaptée, chaque jeu ayant des dimensions différentes, et étant utilisables sélectivement en fonction de la nature du produit à épandre et/ou de la largeur de travail.

L'invention concerne également une machine d'épandage centrifuge d'engrais ou de produits similaires en grains, qui comprend une enceinte de stockage desdits produits et au moins un disque rotatif d'épandage, cette machine étant caractérisée par le fait qu'elle est équipée d'un dispositif conforme à l'une des définitions données ci-dessus.

D'autres caractéristiques et avantages de l'invention apparaîtront de la description et des dessins annexés qui en représentent, à titre d'exemple non limitatif, des modes de réalisation préférentiels.

Sur ces dessins :
- la figure 1 est une vue schématique de côté d'un tracteur équipé d'un dispositif conforme à l'invention ;
- la figure 2 est une vue schématique de dessus, qui montre un mode de réalisation possible d'un disque destiné à équiper un dispositif conforme à l'invention ;
- la figure 3 est une vue en perspective du disque de la figure 2 ;
- la figure 4 est une vue en coupe du même disque, selon le plan IV, IV de la figure 2 ;
- les figures 5A et 5B sont des vues de côté des moyens de sélection qui équipent l'extrémité inférieure d'une goulotte de distribution des produits en grains équipant le dispositif, respectivement dans deux positions extrêmes ;
- la figure 6 est une vue en perspective des moyens de sélection des figures 5A et 5B ;
- la figure 7 est une vue de dessus d'un autre mode de réalisation du disque ;
- la figure 8 est une vue en coupe du même disque, selon le plan VIII, VIII de la figure 7 ;
- Les figures 9 à 11 sont des représentations schématiques de trois variantes possibles de la pale auxiliaire, de forme coudée.

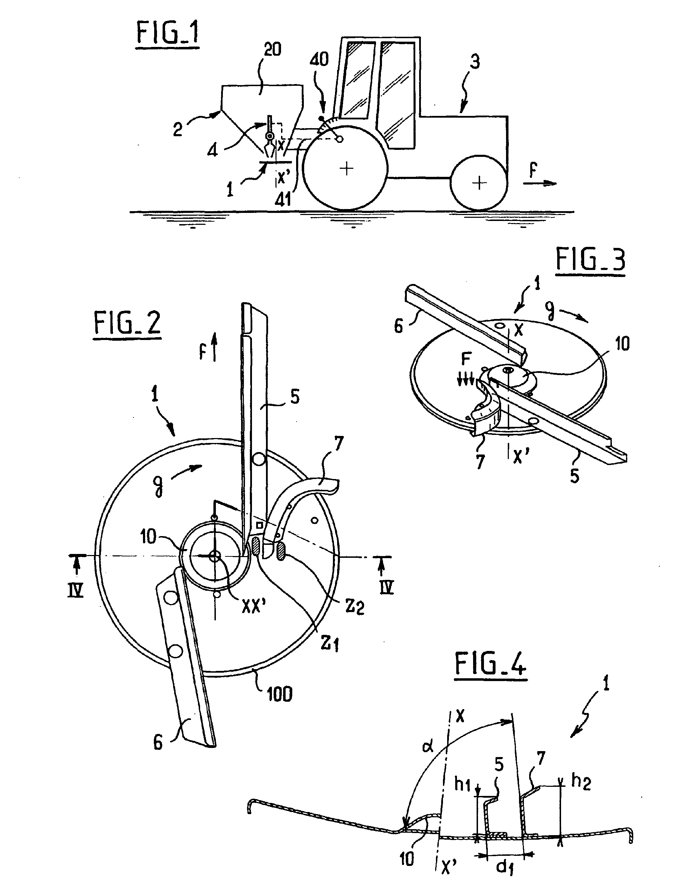

La machine d'épandage représentée à la figure 1 est une machine d'épandage d'engrais de type connu. Cette machine 2 est montée à l'arrière d'un tracteur 3. Elle comporte une enceinte de stockage du produit en grains à épandre, qui consiste en une trémie 20.

Le sens de déplacement du tracteur et de la machine d'épandage est symbolisé par la flèche f.

L'épandeur 2 est muni d'un disque rotatif 1 ou d'une paire de disques rotatifs, sensiblement horizontal (ou horizontaux), d'axe vertical. Des moyens appropriés font tourner ce(s) disque(s) autour de leur axe X-X', comme cela est bien connu.

Le disque 1 est disposé en dessous d'une ouverture de sortie de trémie, et la chute du produit sur le disque se fait par l'intermédiaire d'une goulotte orientable 4.

Sur l'épandeur 2 est prévu un moyen de réglage 40 dont l'actionnement par l'opérateur permet de modifier l'orientation de la goulotte 4. Dans le mode de réalisation illustré à la figure 1, ce réglage se fait par l'intermédiaire d'un système de commande à distance 41, symbolisé par un trait interrompu. Le levier 40 est disposé de telle façon que l'opérateur peut l'actionner sans avoir à quitter son poste de conduite.

Le réglage peut bien évidemment se faire différemment, par exemple à l'aide d'une molette portée par la goulotte.

Le changement d'orientation de la goulotte 4 se fait dans une direction qui est parallèle, ou sensiblement parallèle, à la direction de déplacement **f** du tracteur.

On pourra se reporter au brevet n° 91 02636 (publication n° 2 673 420) au nom du présent demandeur pour y trouver plus de détails sur des modes de réalisation possibles de ce système d'orientation de la goulotte.

Bien entendu, dans un mode de réalisation non représenté de la machine, la trémie 20 pourrait être dépourvue de ce système de réglage permettant d'orienter sélectivement la goulotte selon la direction générale de déplacement du tracteur.

Le disque 1 représenté aux figures 2 à 4 est de type général connu. Il possède une partie centrale 10 en forme de dôme, et est entraîné en rotation autour d'un axe vertical, ou approximativement vertical **XX'**, le sens de rotation étant symbolisé par la flèche **g**.

Le sens d'avancement **f** de la machine sur le sol est également indiqué à la figure 2.

La zone de bordure est située sur la gauche du disque, si on considère le sens de déplacement **f**.

La face supérieure du disque 1, entre le dôme 10 et le bord périphérique 100 est légèrement tronconique, d'axe au sommet très évasé, de sorte que les grains quittent le disque avec une trajectoire ayant une faible composante horizontale dirigée vers le haut.

Ce disque est pourvu de deux pales, dites standard, 5 et 6, qui sont fixées sur le dessus du disque. Comme cela est bien connu, les deux pales sont disposées à l'opposé l'une de l'autre sur le disque. Leur direction est approximativement tangentielle par rapport au bord circulaire de la partie 10 en forme de dôme.

L'une des pales, en l'occurrence, la pale 5, est plus longue que l'autre.

De manière bien connue, chacune des pales est un profilé métallique ayant une section en forme .de U, dont les branches latérales sont sensiblement horizontales et dont l'ouverture est tournée vers l'avant, en considération du sens de rotation **g**.

On pourra le cas échéant se reporter au brevet n° 96 09693 (publication n° 2 751 505) au nom du présent demandeur, pour y trouver des formes de réalisation particulières de ces pales.

Les pales 5 et 6 sont fixées à demeure sur le disque, par exemple au moyen de rivets ou de boulons.

Egalement de manière connue, le disque est équipé d'une pale auxiliaire, référencée 7, qui est positionnée sur le disque, en avant de la pale longue 5.

Il s'agit d'une pale plus courte que la pale standard associée 5, et présentant une forme courbe dans le mode de réalisation présenté ici. Sa concavité est tournée vers l'avant (si on considère son sens d'avancement lors de la rotation du disque).

Ainsi que cela est bien connu, en vue d'un épandage de bordure, cette pale est destinée à intercepter le flux F (voir figure3) de produits déversés devant elle sur le disque 1 pour les projeter à l'extérieur, tout en empêchant qu'ils n'atteignent la pale standard associée 5.

A la figure 2, on a référencé Z₁ et Z₂ les zones de chutes des produits sur le disque 1, qui correspondent respectivement à un épandage normal et à un épandage de bordure. La première zone Z₁ est située devant la pale standard, juste en arrière de la pale auxiliaire. La seconde zone Z₂ est, quant à elle, située en avant de la pale auxiliaire 7.

Conformément à l'invention, l'ensemble des pales 5, 6 et 7 est destiné à rester à demeure sur le disque et le dispositif comporte des moyens de sélection qui vont être aptes à modifier la zone de chute des produits sur le disque de sorte que dans un premier état d'épandage normal, ce soit la pale standard qui intercepte les produits, tandis que la pale auxiliaire 7 n'en intercepte pas, et que dans un second état d'épandage de bordure, la pale auxiliaire 7 intercepte les produits, tandis que la pale standard 5 n'en intercepte pas.

Dans l'exemple de réalisation présenté ici, ces moyens de sélection sont aptes à diriger sélectivement le flux de produits tombant de la trémie vers l'une ou l'autre des deux zones de chute Z₁ et Z₂.

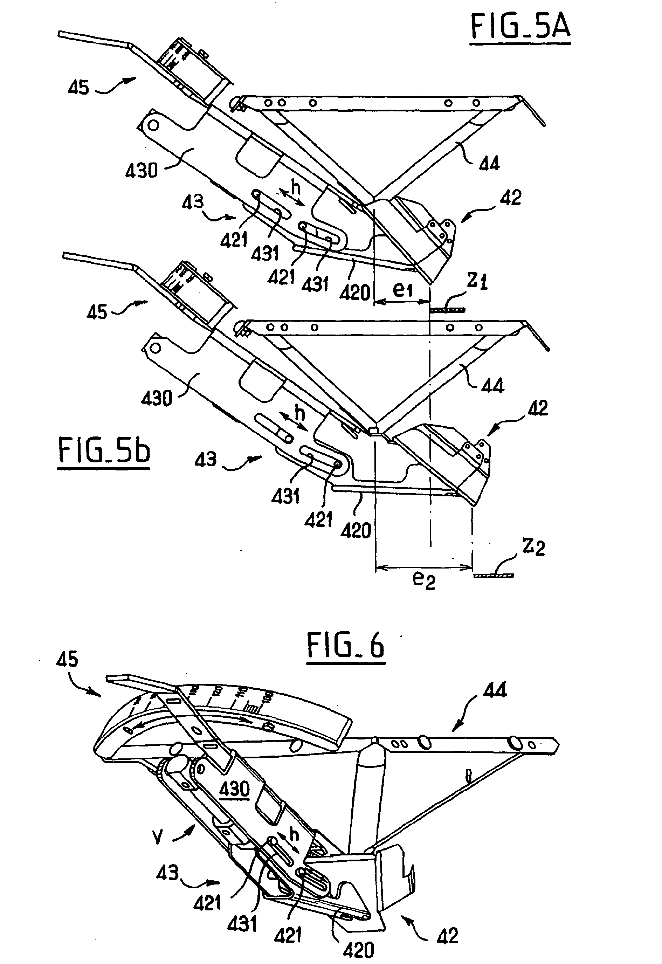

Dans le mode de réalisation présenté aux figures 5A, 5B et 6, ces moyens de sélection consistent en des moyens 45 de déplacement d'au moins l'extrémité inférieure de ladite goulotte 4, entre une position située à la verticale de la première zone Z₁ et une seconde position située à la verticale de la seconde zone Z₂.

Sur ces figures, on a référencé 44 la structure métallique, en forme de pyramide inversée, qui délimite la partie inférieure de la trémie 20 de la machine d'épandage 2, et par la référence 42, l'extrémité inférieure de ladite goulotte 4.

De manière connue en soi, le dispositif est équipé de moyens 45 permettant d'orienter sélectivement ladite extrémité inférieure 42 dans une direction généralement parallèle à la direction **f** de déplacement du tracteur.

Pour plus de détails sur cet agencement, on peut notamment se reporter à la brochure commerciale explicative "Distributeur d'engrais 12 - 36 mètres / SULKY grande culture", édité par le présent demandeur en février 2001.

Sur les moyens précités 45 est prévue une structure allongée 43, qui comporte deux parois parallèles et verticales 430. Elles sont inclinées et dirigées vers le bas de la structure 44. Dans leur partie inférieure sont ménagées deux lumières allongées 431.

Entre les parois est articulé un vérin V, dont la tige (non visible sur les figures) est solidaire d'une pièce 420 rapportée à l'extrémité inférieure 42 de la goulotte. Cette pièce porte, sur ses flancs opposés, deux tétons 421, dont les dimensions sont adaptées pour qu'ils s'engagent à coulissement, dans les lumières 431.

Par actionnement de la tige du vérin, les tétons 421 sont déplacés d'une extrémité à l'autre desdites lumières.

Ce faisant, la pièce 42 est déplacée de manière similaire. Sur les figures 5A et 5B, on a référencé e₁ et e₂ l'écartement entre les points les plus bas de la structure 44 et de la pièce 42.

Dans les deux positions extrêmes représentées sur ces figures, la pièce 42 se situe respectivement à la verticale des zones d'épandage Z₁ et Z₂.

Les moyens de sélection décrits ci-dessus, ainsi que les moyens 45 vont donc pouvoir être facilement commandés à distance, depuis la cabine du tracteur.

De préférence et comme cela apparaît nettement à la figure 4, la pale 7 présente une hauteur h₂ supérieure à celle h₁ de la pale standard 5. Lors d'un épandage de bordure, les engrais n'ont pas le temps de descendre suffisamment bas pour être interceptés par la pale standard. La hauteur plus importante de la pale auxiliaire permet de les récupérer. A titre indicatif, ces hauteurs peuvent être respectivement de 40 et 51,5 mm. Quant à l'angle α formé par le disque et la paroi verticale de la pale 7, il est par exemple de 82°. Enfin, l'écartement d₁ entre les deux pales est par exemple de 37 mm.

La courbure et/ou la longueur de la pale 7 peut (peuvent) être adaptée(s) à la largeur d'épandage de bordure souhaitée.

Dans une forme de réalisation non représentée, la pale auxiliaire peut présenter une paroi rugueuse, au moins sur sa face avant le long de laquelle viennent glisser les grains, de manière à freiner au maximum leur vitesse. Ainsi, des stries, des aspérités ou autres écailles peuvent être formées dans cette paroi.

Dans l'hypothèse ou la machine d'épandage est à deux disques, il peut être prévu une pale auxiliaire sur un seul disque ou sur les deux. Dans ce dernier cas, l'épandage des deux bords opposés d'un champ pourra se faire indifféremment, en utilisant l'un des deux ensembles goulotte/disque adéquats, de gauche ou de droite, en fonction du sens de déplacement de la machine par rapport à la bordure.

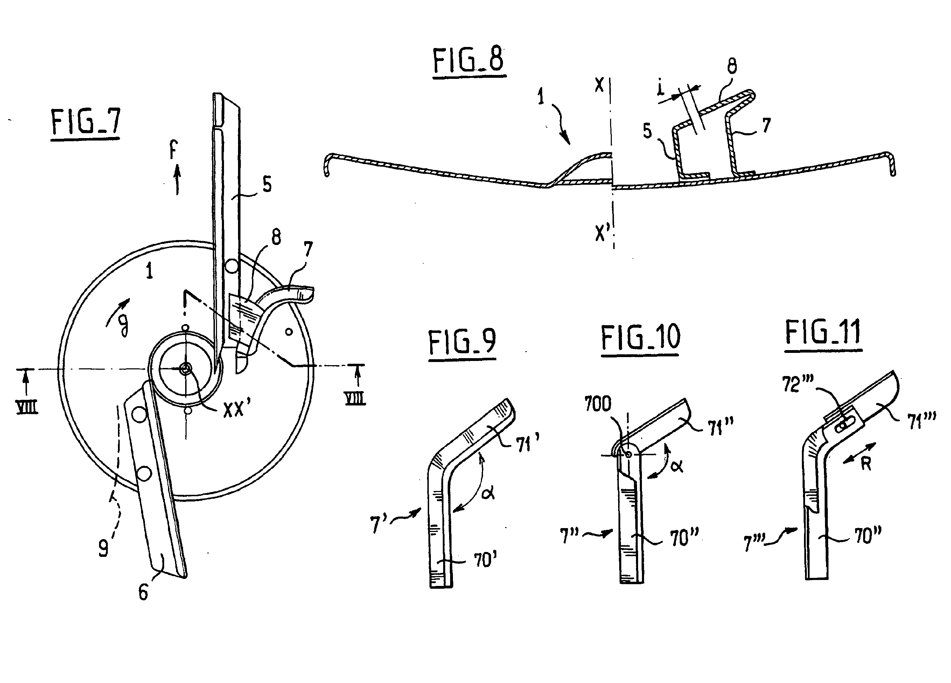

Dans la forme de réalisation représentée aux figures 7 et 8, une seconde pale auxiliaire 9, représentée seulement sous la forme d'une ligne en traits interrompus, est associée à la pale standard 5. Elle présente cependant une courbure moins marquée que celle de la pale 7.

Au-dessus de la paroi supérieure de la pale auxiliaire 7, dans la zone située vers l'intérieur du disque 1 est montée une plaque 8 qui la recouvre partiellement, dans une région immédiatement voisine de la zone de chute Z₁ des produits, dans le sens de leur déplacement le long de la pale. Elle est rapportée, par exemple par soudage, à la pale 7 ou forme partie intégrante de celle-ci.

Cette plaque est dirigée et légèrement inclinée vers l'arrière et vers le bas. De préférence elle se trouve à un niveau légèrement plus haut que la paroi supérieure de la pale standard 5, dont elle est séparée par un intervalle (i).

Dans le cas d'un épandage de bordure, cette plaque formant toit rapporté évite que quelques grains ne soient intempestivement interceptés par la pale standard.

La variante de pale 7' représentée sur la figure 9 a une forme coudée, constituée d'un tronçon intérieur et d'un tronçon extérieur rectilignes qui forment entre eux un angle α obtus, dont la valeur est avantageusement de l'ordre de 105 à 115 degrés.

Aux figures 10 et 11, la paroi supérieure de la pale a été, à dessein, représentée de manière incomplète afin que les parties arrachées de cette paroi laissent apparaître les organes de réglage.

Dans le mode de réalisation de la figure 10, sur laquelle la pale est référencée 7", la valeur de cet angle α peut être modifiée, grâce à un montage articulé du tronçon extérieur pivotant sur le tronçon intérieur fixe, l'axe d'articulation portant la référence 700.

Dans le mode de réalisation de la figure 11, sur laquelle la pale est référencée 7"', est prévu à un montage coulissant "R" du tronçon extérieur 71"' qui est extensible en translation axiale par rapport au tronçon intérieur fixe 70"' Le guidage est assuré par un système connu, tel qu'un téton engagé dans une lumière.

Des moyens de verrouillage appropriés assurent le maintien de la pale extérieure dans la position angulaire (figure 10) ou d'extension (figure 11) souhaitée.

Ces possibilités de réglage peuvent être souhaitables pour adapter la largeur effective d'épandage de bordure à la nature et à la qualité du produit (granulométrie et taux d'humidité notamment).

Dans un mode de réalisation non représenté, la trémie 20 est équipé de deux tubulures de distribution, dont l'extrémité débouchante se situe à la verticale des zones Z₁ et Z₂. Dans cette hypothèse, les moyens de sélection revendiqués consistent simplement en des moyens d'obturation sélectifs de l'un ou l'autre des tubulures.

Dans encore un autre mode de réalisation non représenté, lesdits moyens de sélection consistent en des moyens de déplacement dudit disque 1 dans son propre plan, d'une première position dans laquelle la zone de chute des grains est située devant la pale standard 5, juste en arrière de la pale auxiliaire 7, pour un épandage normal, et une seconde position dans laquelle la zone de chute est située en avant de la pale auxiliaire 7 pour un épandage de bordure. Contrairement aux formes de réalisation décrites en référence aux figures, c'est donc le disque 1 qui est mobile, et non pas l'extrémité inférieure de la goulotte.

## Revendications

1. Dispositif d'épandage centrifuge d'engrais ou de produits similaires en grains, qui comprend au moins un disque rotatif (1), d'axe vertical (X-X'), portant au moins deux pales éjectrices (5,6), dites standard, servant à l'épandage normal, et au moins une pale (7, 9), dite auxiliaire, associée à l'une (6) des pales standard et servant à l'épandage de bordure, qui est plus courte que ladite pale standard et qui est positionnée devant cette dernière pour intercepter, en vue d'un épandage de bordure, le flux (**F**) de produits déversés devant elle sur le disque (1) et les projeter à l'extérieur, **caractérisé par le fait qu**'il comporte des moyens de sélection (43) aptes à modifier la zone de chute des produits sur le disque (1), de sorte que dans un premier état d'épandage normal, la pale standard (6) intercepte lesdits produits, tandis que la pale auxiliaire n'intercepte pas de produits, et que dans un second état d'épandage de bordure, la pale auxiliaire (7, 9) intercepte lesdits produits, tandis que la pale standard n'intercepte pas de produits.

2. Dispositif selon la revendication 1, **caractérisé par le fait que** lesdits moyens de sélection (43) sont aptes à diriger sélectivement le flux (F) de produits vers l'une ou l'autre de deux zones de chute (Z₁, Z₂), à savoir une première zone (Z₁) située devant la pale standard (6), juste en arrière de la pale auxiliaire (7, 9) pour un épandage normal, et une seconde zone située en avant la pale auxiliaire (7, 9), pour un épandage de bordure.

3. Dispositif selon la revendication 1 ou 2, **caractérisé par le fait que** lesdits moyens de sélection (43) agissent dans une direction sensiblement perpendiculaire à sa direction (f) de déplacement.

4. Dispositif selon l'une des revendications 2 ou 3, qui est équipé d'une enceinte (2) de stockage desdits produits associée à une goulotte (4) de distribution de ces produits sur le disque (1), **caractérisé par le fait que** lesdits moyens de sélection (43) consistent en des moyens de déplacement d'au moins l'extrémité inférieure (42) de ladite goulotte (4), entre une première position située à la verticale de ladite première zone (Z₁) et une seconde position située à la verticale de ladite seconde zone (Z₂).

5. Dispositif selon l'une des revendications 2 à 4 qui est porté par un tracteur (T), **caractérisé par le fait que** le poste de pilotage dudit tracteur comporte des moyens de commande à distance desdits moyens de sélection (43).

6. Dispositif selon l'une des revendications 1 à 5, **caractérisé par le fait qu'**il comporte également des moyens de réglage aptes à orienter sélectivement le flux (F) dans une direction généralement parallèle à sa direction (f) de déplacement.

7. Dispositif selon l'une des revendications 1 à 6, **caractérisé par le fait que** les pales standard (5, 6) sont rectilignes, tandis que la pale auxiliaire (7, 9) est courbe, de concavité dirigée vers l'avant.

8. Dispositif selon l'une des revendications 1 à 6, **caractérisé par le fait que** les pales standard (5, 6) sont rectilignes, tandis que la pale auxiliaire (7', 7") est coudée, constituée de deux parties rectilignes (70, 71) qui forment entre elles un angle (α) supérieur à l'angle droit, dont l'ouverture est tournée vers l'avant.

9. Dispositif selon la revendication 8, **caractérisé par le fait que** la partie extérieure (71" ; 71 "') est réglable par rapport à la partie intérieure (70" ; 70"') par pivotement permettant de modifier ledit angle (α), ou par translation axiale permettant d'en modifier la longueur active.

10. Dispositif selon l'une des revendications 1 à 9, **caractérisé par le fait que** la pale auxiliaire (7, 9) est plus haute que la pale standard (5, 6) à laquelle elle est associée, au moins dans la zone de chute du produit sur le disque.

11. Dispositif selon l'une des revendications 1 à 10, dont les deux pales standard (5, 6) sont chacune combinées à une pale de bordure (7, 9).

12. Dispositif selon l'une des revendications 1 à 11, **caractérisé par le fait que** la paroi de ladite pale auxiliaire (7, 9) est prévue rugueuse, au moins sur sa face avant, destinée à venir en contact avec le produit.

13. Dispositif selon l'une des revendications 1 à 12, **caractérisé par le fait qu**'il comporte une plaque (8) qui recouvre partiellement ladite pale auxiliaire (7), et s'étend vers l'arrière de celle-ci, dans une région immédiatement voisine de la zone de chute des produits, et dans leur sens de déplacement le long de la pale.

14. Dispositif selon la revendication 1, **caractérisé par le fait que** lesdits moyens de sélection consistent en des moyens de déplacement dudit disque (1) dans son propre plan, d'une première position dans laquelle la zone de chute des grains est située devant la pale standard (5, 6), juste en arrière de la pale auxiliaire (7, 9), pour un épandage normal, et une seconde position dans laquelle la zone de chute est située en avant de la pale auxiliaire (7, 9) pour un épandage de bordure.

15. Dispositif selon la revendication 1, **caractérisé par le fait qu**'il comporte une série de jeux de pales constitués chacun d'une pale auxiliaire (7) et d'une pale standard (5) qui lui est adaptée, chaque jeu ayant des dimensions différentes, et étant utilisables sélectivement en fonction de la nature du produit à épandre et/ou de la largeur de travail.

16. Machine d'épandage centrifuge d'engrais ou de produits similaires en grains, qui comprend une enceinte (2) de stockage desdits produits et au moins un disque rotatif (1) d'épandage, **caractérisée par le fait qu**'elle est équipée d'un dispositif conforme à l'une des revendications 1 à 15.

## Claims

1. Centrifugal device for spreading fertilizer or similar granular products, that comprises at least one rotary disc (1), with a vertical axis (X-X'), supporting at least two ejector paddles (5, 6) called standard, used for normal spreading, and at least one paddle (7, 9), called auxiliary, associated with one of the standard paddles (6) and used for spreading along an edge, that is shorter than the said standard paddle and that is positioned in front of the latter in order to intercept, for the purpose of spreading along an edge, the flow (F) of products poured in front of it onto the disc (1) and throw them outwards, **characterized in that** it comprises selection means (43) capable of modifying the zone of fall of the products onto the disc (1), so that, in a first state of normal spreading, the standard paddle (6) intercepts the said products, while the auxiliary paddle does not intercept products, and that in a second state of spreading along an edge, the auxiliary paddle (7, 9) intercepts the said products, while the standard paddle does not intercept products.

2. Device according to Claim 1, **characterized in that** the said selection means (43) are capable of selectively directing the flow (F) of products towards one or other of two zones of fall (Z₁, Z₂), namely a first zone (Z₁) situated in front of the standard paddle (6), just behind the auxiliary paddle (7, 9) for a normal spreading, and a second zone situated in front of the auxiliary paddle (7, 9) for spreading along an edge.

3. Device according to Claim 1 or 2, **characterized in that** the said selection means (43) act in a direction substantially perpendicular to its direction (f) of movement.

4. Device according to one of Claims 2 or 3, that is fitted with an enclosure (2) for storing the said products associated with a spout (4) for the distribution of these products onto the disc (1), **characterized in that** the said selection means (43) consist of means for moving at least the bottom end (42) of the said spout (4) between a first position situated on the vertical of the said first zone (Z₁) and a second position situated on the vertical of the said second zone (Z₂).

5. Device according to one of Claims 2 to 4, that is carried by a tractor (T), **characterized in that** the driving position of the said tractor comprises means for remotely controlling the said selection means (43).

6. Device according to one of Claims 1 to 5, **characterized in that** it also comprises adjustment means capable of selectively orienting the flow (F) in a direction generally parallel to its direction (f) of movement.

7. Device according to one of Claims 1 to 6, **characterized in that** the standard paddles (5, 6) are rectilinear, while the auxiliary paddle (7, 9) is curved, with the concavity directed forwards.

8. Device according to one of Claims 1 to 6, **characterized in that** the standard paddles (5, 6) are rectilinear, while the auxiliary paddle (7', 7") is bent, consisting of two rectilinear portions (70, 71) that form between them an angle (α) greater than a right angle, whose opening is turned forwards.

9. Device according to Claim 8, **characterized in that** the outer portion (71''; 71''') can be adjusted relative to the inner portion (70" ; 70''') by pivoting making it possible to modify the said angle (α) or by axial translation making it possible to modify the active length.

10. Device according to one of Claims 1 to 9, **characterized in that** the auxiliary paddle (7, 9) is higher than the standard paddle (5, 6) with which it is associated, at least in the zone of fall of the product onto the disc.

11. Device according to one of Claims 1 to 10, whose two standard paddles (5, 6) are each combined into an edge paddle (7, 9).

12. Device according to one of Claims 1 to 11, **characterized in that** the wall of the said auxiliary paddle (7, 9) is provided to be rough, at least on its front face designed to come into contact with the product.

13. Device according to one of Claims 1 to 12, **characterized in that** it comprises a plate (8) that partially covers the said auxiliary paddle (7) and extends towards the rear of the latter, in a region immediately adjacent to the zone of fall of the products and in their direction of movement along the paddle.

14. Device according to Claim 1, **characterized in that** the said selection means consist of means for moving the said disc (1) in its own plane, from a first position in which the zone of fall of the granules is situated in front of the standard paddle (5, 6), just behind the auxiliary paddle (7, 9) for a normal spreading, and a second position in which the zone of fall is situated in front of the auxiliary paddle (7, 9) for spreading along an edge.

15. Device according to Claim 1, **characterized in that** it comprises a series of sets of paddles each consisting of an auxiliary paddle (7) and a standard paddle (5) which is adapted thereto, each set having different dimensions and being able to be used selectively according to the nature of the product to be spread and/or the working width.

16. Machine for the centrifugal spreading of fertilizer or similar granular products, that comprises an enclosure (2) for storing the said products and at least one rotary spreading disc (1), **characterized in that** it is fitted with a device according to one of Claims 1 to 15.

## Patentansprüche

1. Vorrichtung zum Fliehkraftstreuen von Dünger oder ähnlichen als Körner vorliegenden Produkten, die folgendes umfaßt: wenigstens eine rotierende Scheibe (1) mit vertikaler Achse (X-X'), die wenigstens zwei Auswurfsschaufelblätter (5, 6) trägt, die als Standardschaufelblätter bezeichnet werden und die dem normalen Streuen dienen, und wenigstens ein als Nebenschaufelblatt bezeichnetes Schaufelblatt (7, 9), das einem (6) der Standardschaufelblätter zugeordnet ist und dem Streuen der Ränder dient, das kürzer ist als das Standardschaufelblatt und das vor diesem letzteren positioniert ist, um für ein Streuen der Ränder den Fluß (F) der Produkte, die vor es auf die Scheibe (1) ausgegeben werden, einzufangen und nach außen zu schleudern, **dadurch gekennzeichnet, daß** sie Auswahlmittel (43) umfaßt, die dafür geeignet sind, die Auftreffzone der Produkte auf der Scheibe (1) zu verändern, derart, daß in einem ersten Zustand des normalen Streuens das Standardschaufelblatt (6) die Produkte einfängt, wohingegen das Nebenschaufelblatt keine Produkte einfängt und daß in einem zweiten Zustand zum Randstreuen das Nebenschaufelblatt (7, 9) die Produkte einfängt wohingegen das Standardschaufelblatt keine Produkte einfängt.

2. Vorrichtung nach Anspruch 1, **dadurch gekennzeichnet, daß** die Auswahlmittel (43) dafür geeignet sind, den Fluß (F) der Produkte wahlweise auf die eine oder die andere von zwei Auftreffzonen (Z₁, Z₂) zu richten, und zwar eine erste Zone (Z₁) für das normale Streuen, die sich vor dem Standardschaufelblatt (6) befindet, direkt hinter dem Nebenschaufelblatt (7, 9), und eine zweite Zone, die sich vor dem Nebenschaufelblatt (7, 9) befindet, für das Randstreuen.

3. Vorrichtung nach Anspruch 1 oder 2, **dadurch gekennzeichnet, daß** die Auswahlmittel (43) in einer Richtung im wesentlichen senkrecht zu ihrer Fortbewegungsrichtung (f) tätig werden.

4. Vorrichtung nach einem der Ansprüche 2 oder 3, die mit einem Behälter (2) zur Speicherung der Produkte in Verbindung mit einer Rinne (4) zur Verteilung dieser Produkte auf der Scheibe (1) ausgestattet ist, **dadurch gekennzeichnet, daß** die Auswahlmittel (43) aus Mitteln zum Verschieben von wenigstens dem unteren Ende (42) der Rinne (4) zwischen einer ersten Position, die sich senkrecht über der ersten Zone (Z₁) befindet, und einer zweiten Position, die sich senkrecht über der zweiten Zone (Z₂) befindet, bestehen.

5. Vorrichtung nach einem der Ansprüche 2 bis 4, die von einem Traktor (T) getragen wird, **dadurch gekennzeichnet, daß** der Führerstand des Traktors Mittel zur Fernbedienung der Auswahlmittel (43) umfaßt.

6. Vorrichtung nach einem der Ansprüche 1 bis 5, **dadurch gekennzeichnet, daß** sie auch Einstellmittel umfaßt, die dafür geeignet sind, den Fluß (F) wahlweise in eine Richtung auszurichten, die im wesentlichen parallel zu ihrer Fortbewegungsrichtung (f) ist.

7. Vorrichtung nach einem der Ansprüche 1 bis 6, **dadurch gekennzeichnet, daß** die Standardschaufelblätter (5, 6) gerade sind, wohingegen das Nebenschaufelblatt (7, 9) gekrümmt ist, mit einer nach vorne gerichteten Konkavität.

8. Vorrichtung nach einem der Ansprüche 1 bis 6, **dadurch gekennzeichnet, daß** die Standardschaufelblätter (5, 6) gerade sind, wohingegen das Nebenschaufelblatt (7', 7") abgewinkelt ist, wobei es aus zwei geraden Teilen (70, 71) besteht, die miteinander einen Winkel (α) bilden, der größer als ein rechter Winkel ist und dessen Öffnung nach vorne gerichtet ist.

9. Vorrichtung nach Anspruch 8, **dadurch gekennzeichnet, daß** der äußere Teil (71"; 71"') relativ zum inneren Teil (70"; 70"') einstellbar ist, und zwar durch eine Drehung, die es gestattet, den Winkel (α) zu verändern, oder durch eine axiale Verschiebung, die es gestattet dessen wirksame Länge zu verändern.

10. Vorrichtung nach einem der Ansprüche 1 bis 9, **dadurch gekennzeichnet, daß** das Nebenschaufelblatt (7, 9), wenigstens in der Auftreffzone des Produkts auf der Scheibe, höher ist als das ihm zugeordnete Standardschaufelblatt (5, 6).

11. Vorrichtung nach einem der Ansprüche 1 bis 10, deren zwei Standardschaufelblätter (5, 6) jedes mit einem Randschaufelblatt (7, 9) kombiniert sind.

12. Vorrichtung nach einem der Ansprüche 1 bis 11, **dadurch gekennzeichnet, daß** die Wand des Nebenschaufelblatts (7, 9) als rauh vorgesehen ist, und dies wenigstens auf ihrer Vorderseite, die dafür bestimmt ist, mit dem Produkt in Kontakt zu kommen.

13. Vorrichtung nach einem der Ansprüche 1 bis 12, **dadurch gekennzeichnet, daß** sie eine Platte (8) umfaßt, die das Nebenschaufelblatt (7) teilweise abdeckt und sich in Bezug auf dieses nach hinten erstreckt, in einem Bereich, der unmittelbar benachbart zur Auftreffzone der Produkte liegt, und in deren Bewegungsrichtung entlang des Schaufelblatts.

14. Vorrichtung nach Anspruch 1, **dadurch gekennzeichnet, daß** die Auswahlmittel aus Mitteln zur Verschiebung der Scheibe (1) in ihrer eigenen Ebene bestehen, und dies von einer ersten Position für das normale Streuen, in der die Auftreffzone der Körner sich vor dem Standardschaufelblatt (5, 6) befindet, direkt hinter dem Nebenschaufelblatt (7, 9), zu einer zweiten Position, in der die Auftreffzone sich vor dem Nebenschaufelblatt (7, 9) befindet, für das Streuen der Ränder.

15. Vorrichtung nach Anspruch 1, **dadurch gekennzeichnet, daß** sie eine Reihe von Schaufelblattsätzen umfaßt, von denen jeder aus einem Nebenschaufelblatt (7) und einem darauf angepaßten Standardschaufelblatt (5) besteht, wobei jeder Satz verschiedene Abmessungen hat und wahlweise einsetzbar ist, in Abhängigkeit von der Beschaffenheit des zu streuenden Produkts und/oder der Arbeitsbreite.

16. Maschine zum Fliehkraftstreuen von Dünger oder ähnlichen als Körner vorliegenden Produkten, die einen Behälter (2) zur Speicherung der Produkte und wenigstens eine rotierende Scheibe (1) umfaßt, **dadurch gekennzeichnet, daß** sie mit einer Vorrichtung gemäß einem der Ansprüche 1 bis 15 ausgerüstet ist.
